# EUROPEAN PATENT APPLICATION

(11) **EP 4 819 129 A1**
(43) Date of publication of application: **07.10.2026**
(21) Application number: 26168699.2
(22) Date of filing: 27.03.2026
(51) Int. Cl.: G10L 15/26, G10L 15/187, G10L 25/78

(54) **METHOD FOR EFFICIENT TRANSCRIPTION WITH SELECTIVE TRANSCRIPTION SEQUENCES**

(30) Priority: 02.04.2025 US 202519098790
(71) Applicant: Mitel Networks Corporation, Ottawa, Ontario K2K 3K1 (CA)
(72) Inventor: Tsiatsikas, Zisis, 55534 Thessaloniki (GR); Naidoo, Logendra, Ottawa, K1S 0W8 (CA)
(74) Representative: McDougall, James

(57) **Abstract**

Systems and methods including one or more processors and one or more non-transitory storage devices storing computing instructions configured to run on the one or more processors and perform acts of capturing audio data from the UC system; processing the captured audio data to identify a plurality of distinct audio segments based on pauses and word boundaries in the audio data; analyzing each audio segment in the plurality of distinct audio segments to identify and extract a plurality of phonemes; converting, using a computerized model, the plurality of phonemes into a plurality of corresponding letters; determining, using a language model, a sequence of letters based on the plurality of phonemes and the plurality of corresponding letters; and compiling the sequence of letters into words to generate a transcription of the audio data.

## Description

### TECHNICAL FIELD

This disclosure relates generally to unified communication (UC) methods and systems and more particularly to methods and systems for transcribing audio data for a UC system.

### BACKGROUND

Translation and transcription play a crucial role in the UC market as they can enable a wide set of generative artificial intelligence (AI) features, oftentimes using cloud services. Existing technologies have tried to offload the relevant cloud services costs by taking advantage of edge power (e.g., utilizing client devices). In other words, translation and transcription can be done directly on client devices without relying on the cloud.

Existing technologies also load complete audio samples as input to the translation/transcription tools. Essentially, they record an audio clip and then feed the complete clip to the translation/transcription tools to obtain a transcript. This means that the translation/transcription tool must transcribe everything by consuming a significant portion of the central processing unit (CPU) resources on the edge device.

Therefore, there is a need to further optimize resource consumption and reduce CPU usage for translation and transcription on edge devices.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements and wherein:
FIG. 1 is a block diagram of a system according to aspects of this disclosure;
FIG. 2 is a flowchart of a method for transcribing and encrypting audio data according to aspects of this disclosure;
FIG. 3 is a flowchart depicting a method for transcribing and encrypting audio data in selective transcription sequences according to aspects of this disclosure; and
FIG. 4 illustrates a representative block diagram of a computer system, according to an embodiment.

It will be appreciated that elements in the figures are illustrated for simplicity and clarity and have not necessarily been drawn to scale. For example, the dimensions of some of the elements in the figures may be exaggerated relative to other elements to help to improve understanding of illustrated embodiments of the present invention.

### DETAILED DESCRIPTION

The description of exemplary embodiments of the present invention provided herein is merely exemplary and is intended for purposes of illustration only; the following description is not intended to limit the scope of the invention as claimed. Moreover, recitation of multiple embodiments having stated features is not intended to exclude other embodiments having additional features or other embodiments incorporating different combinations of the stated features.

It must also be noted that, the term "exemplary" is used in the sense of "example," rather than "ideal."

It must also be noted that, as used in the specification and the appended claims, the singular forms "a," "an" and "the" include plural referents unless the context clearly dictates otherwise.

By "comprising" or "containing" or "including" it is meant that at least the named compound, element, particle, or method step is present in the composition or article or method, but does not exclude the presence of other compounds, materials, particles, method steps, even if the other such compounds, material, particles, method steps have the same function as what is named.

Relative terms, such as "about," "substantially," or "approximately" are used to include small variations with specific numerical values (e.g., +/- x%,), as well as including the situation of no variation (+/-0%).

As used herein, "database" refers to any suitable database for storing information, electronic files or code to be utilized to practice embodiments of this disclosure. As used herein, "server" refers to any suitable server, computer or computing device for performing functions utilized to practice embodiments of this disclosure.

As used herein, "software" refers to programs or other operating information utilized by a processor or other computing hardware.

As used herein, "meeting" means a meeting or conference such as telephonic, video, audio/video, in-person, a hybrid of any of the preceding, and any type of meeting involving multiple participants.

This disclosure provides a system for transcribing audio data for a unified communication (UC) system (also referred to herein as "the system"). The system described herein can perform translation/transcription that makes use of a reduced number of audio sample inputs and can achieve similar or even better results of translation/transcription compared to existing methods. By reducing the number of audio samples/inputs, the system can lower the CPU resources required for completing translation/transcription. The system can sample audio data based on phonemic relevance using silence detection to block off the most meaningful segments and create flattened audio data. Using silence detection, the system may omit redundant portions, such as silence or noise, which has no meaning for the transcription. The system may process the flattened audio data to extract partial phonetic representations, which can then be passed to a predictive language model to reconstruct complete words and sentences. The system may utilize the language model to predict and reconstruct text from the partial phoneme transcriptions which exploit the efficiency of text-based models. A phoneme is a small unit of sound in speech. By using this method, the system can offload the computationally heavy and cost-prohibitive task of processing entire audio sequences.

Particular aspects or embodiments of the subject matter described in this disclosure may be implemented to realize one or more of the following advantages. Traditional transcription methods require processing the entire audio sequence of the audio data, which can result in significant use of computational resources. By contrast, the system described herein can minimize computational resources by leveraging the efficiencies of phonemic transcription and lightweight language models. The integration of these components can maintain accurate transcription with a significantly reduced computational footprint because the system can load parts of the audio that correspond to the relevant phonemes of a word. As an example, the system may utilize the Wav2Vec2 family of models. Wav2Vec2 is a type of machine learning model that can perform automatic speech recognition (ASR) on audio data to learn speech units within the audio data.

In this way, the system can get only a few letters from the audio and then reconstruct the complete words and/or sentences by predicting the relevant words using a simple language model. For example, assume the following text corresponds to the original spoken audio: "Mitel is considered a leader in UC communications". Current solutions would take the complete audio to give as input to the translation/transcription modules. However, the present system can transcribe only selective audio samples, such as, for example, in the above example: "Mitel is co...ed le...er in UC co...ons". Therefore, the input is reduced, and accordingly, the transcription costs and CPU resources are also reduced. As a result, the system described herein can minimize the resources required for translation/transcription tasks as it can translate/transcribe less audio samples compared to existing technologies.

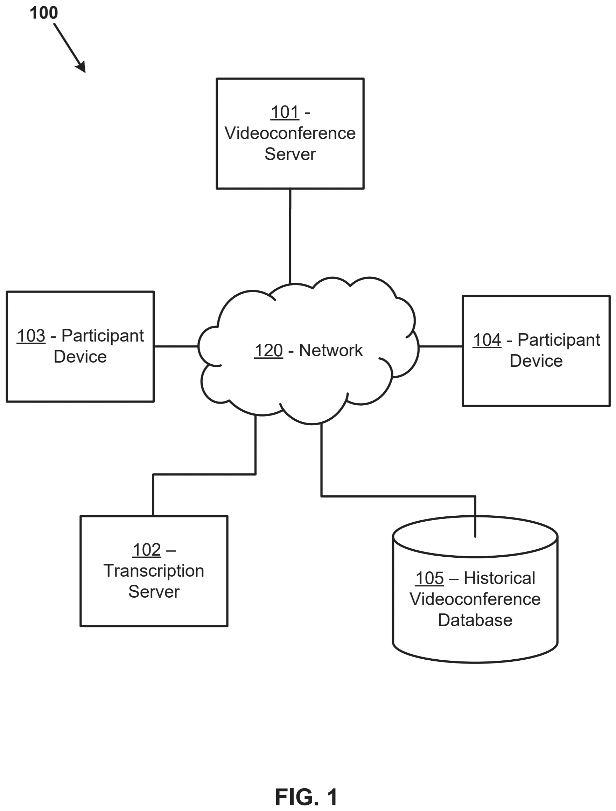

Turning to the figures, FIG. 1 illustrates a block diagram of a system 100 that can be employed for transcribing audio data for a unified communication (UC) system, as described in greater detail below. System 100 is merely exemplary and embodiments of the system are not limited to the embodiments presented herein. System 100 can be employed in many different embodiments or examples not specifically depicted or described herein. In some embodiments, certain elements or modules of system 100 can perform various procedures, processes, and/or activities. In these or other embodiments, the procedures, processes, and/or activities can be performed by other suitable elements or modules of system 100.

Generally speaking, system 100 can be implemented with hardware and/or software. Part or all of the hardware and/or software implemented in system 100 can be conventional or part or all of the hardware and/or software can be customized (e.g., optimized) for implementing part or all of the functionality of system 100 described herein.

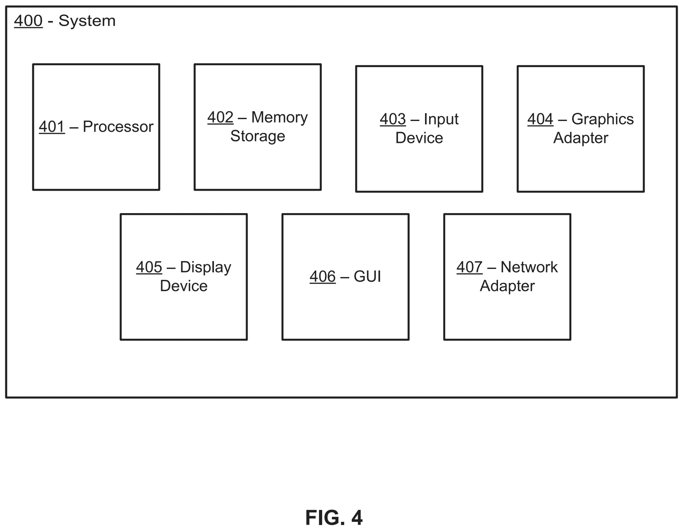

System 100 can include videoconference server 101, transcription server 102, participant devices 103, 104, and/or historical videoconference database 105. Videoconference server 101, transcription server 102, and/or participant devices 103, 104 can each be a computer system, such as computer system 400 (FIG. 4) and can each be a single computer, a single server, a cluster or collection of computers or servers, or a cloud of computers or servers.

Participant devices 103, 104 can comprise any of the elements described in relation to computer system 400 (FIG. 4). For example, participant devices 103, 104 can be mobile devices. A mobile device can refer to a portable electronic device (e.g., an electronic device easily conveyable by hand by a person of average size) with the capability to present audio and/or visual data (e.g., text, images, videos, music, etc.). For example, a mobile electronic device can comprise at least one of a digital media player, a cellular telephone (e.g., a smartphone), a personal digital assistant, a handheld digital computer device (e.g., a tablet personal computer device), a laptop computer device (e.g., a notebook computer device, a netbook computer device), a wearable user computer device, or another portable computer device with the capability to present audio and/or visual data (e.g., images, videos, music, etc.). Thus, in many examples, a mobile electronic device can comprise a volume and/or weight sufficiently small as to permit the mobile electronic device to be easily conveyable by hand.

Exemplary mobile electronic devices can comprise (i) an iPod^{®}, iPhone^{®}, iTouch^{®}, iPad^{®}, MacBook^{®} or similar product by Apple Inc. of Cupertino, California, United States of America, (ii) a Pixel^{™} product or a similar product by Google Inc. of Menlo Park, California, United States of America, (iii) a Lumia^{®} or similar product by the Nokia Corporation of Keilaniemi, Espoo, Finland, and/or (iv) a Galaxy^{™} or similar product by the Samsung Group of Samsung Town, Seoul, South Korea. Further, in the same or different embodiments, a mobile electronic device can comprise an electronic device configured to implement one or more of (i) the iPhone^{®} operating system by Apple Inc. of Cupertino, California, United States of America, (ii) the Palm^{®} operating system by Palm, Inc. of Sunnyvale, California, United States, (iii) the Android^{™} operating system developed by the Open Handset Alliance, (iv) the Windows Mobile^{™} operating system by Microsoft Corp. of Redmond, Washington, United States of America, or (v) the Symbian^{™} operating system by Nokia Corp. of Keilaniemi, Espoo, Finland.

Videoconference server 101, transcription server 102, and/or one or more of participant devices 103, 104 can each comprise one or more input devices (e.g., one or more keyboards, one or more keypads, one or more pointing devices such as a computer mouse or computer mice, one or more touchscreen displays, a microphone, etc.), and/or can each comprise one or more display devices (e.g., one or more monitors, one or more touch screen displays, projectors, etc.). In these or other embodiments, one or more of the input device(s) can be similar or identical to input device 403 (FIG. 4). Further, one or more of the display device(s) can be similar or identical to display device 405 (FIG. 4). The input device(s) and the display device(s) can be coupled to the processing module(s) and/or the memory storage module(s) of videoconference server 101, transcription server 102, and/or one or more of participant devices 103, 104 in a wired manner and/or a wireless manner, and the coupling can be direct and/or indirect, as well as locally and/or remotely. As an example of an indirect manner (which may or may not also be a remote manner), a keyboard-video-mouse (KVM) switch can be used to couple the input device(s) and the display device(s) to the processing module(s) and/or the memory storage module(s). In some embodiments, the KVM switch also can be part of videoconference server 101, transcription server 102, and/or one or more of participant devices 103, 104. In a similar manner, the processing module(s) and the memory storage module(s) can be local and/or remote to each other.

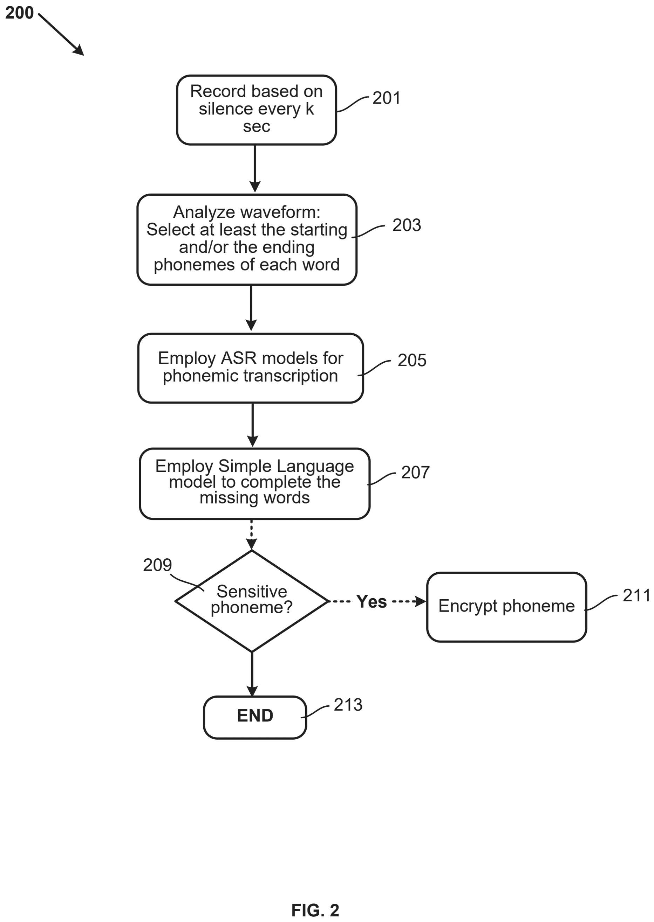

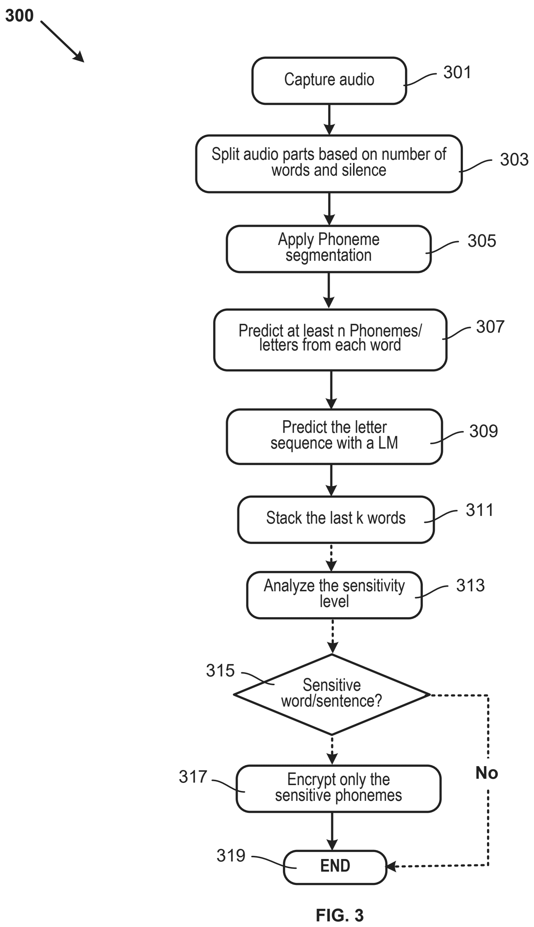

Videoconference server 101 can host and/or run one or more videoconference software platforms. Transcription server 102 can host a system for transcribing audio data for a unified communication (UC) system as described herein. For example, transcription server 102 can perform one or more steps of method 200 (FIG. 2) and/or method 300 (FIG. 3). In some embodiments, transcription server 102 can be embodied in and/or distribute a software application capable of performing one or more steps of method 200 (FIG. 2) and/or method 300 (FIG. 3). The software application can be installed/installable on one or more of participant devices 103, 104.

Videoconference server 101, transcription server 102, and/or participant devices 103, 104 can communicate or interface (e.g., interact) with one another through network 120. Network 120 can be an intranet that is not open to the public, a mesh network of individual systems, and/or a distributed system. Accordingly, in many embodiments, videoconference server 101 and/or transcription server 102 (and/or the software used by such systems) can refer to a back end of system 100 operated by an operator and/or administrator of system 100, and participant devices 103, 104 (and/or the software used by such systems) can refer to a front end of system 100 used by one or more participants, respectively. An operator and/or administrator of system 100 can manage system 100, the processing module(s) of system 100, and/or the memory storage module(s) of system 100 using the input device(s) and/or display device(s) of system 100.

Videoconference server 101, transcription server 102, and/or participant devices 103, 104 also can be configured to communicate with one or more databases. The one or more databases can comprise a historical videoconference database 105 that stores records about past videoconferences. The historical videoconference database 105 can also comprise an interaction database containing information about interactions of participant devices with a videoconference. These interactions can be tied to a unique identifier (e.g., an Internet Protocol (IP) address, an advertising ID, device ID, etc.) and/or a user account. In embodiments where a participant interacts with a videoconference before logging into a user account, data stored in the one or more database that is associated with a unique identifier can be merged with and/or associated with data associated with the user account. The one or more databases may also include a user profile database. The user profile database may include one or more user profiles for each user of the communication apparatus, where each profile in the user profile database can contain specific preferences for each user of the UC system. Data can be deleted from a database when it becomes older than a maximum age, which can be set by an administrator of system 100. Data collected in real-time can be streamed to a database for storage, thereby increasing a storage speed of a database.

The one or more databases can be stored on one or more memory storage modules (e.g., non-transitory memory storage module(s)), which can be similar or identical to the one or more memory storage module(s) (e.g., non-transitory memory storage module(s)) described below with respect to computer system 400 (FIG. 4). Further, the one or more databases can each be stored on a single memory storage module of the memory storage module(s), and/or the non-transitory memory storage module(s) storing the one or more databases or the contents of that particular database can be spread across multiple ones of the memory storage module(s) and/or non-transitory memory storage module(s) storing the one or more databases, depending on the size of the particular database and/or the storage capacity of the memory storage module(s) and/or non-transitory memory storage module(s). In various embodiments, databases can be stored in a cache (e.g., MegaCache) for immediate retrieval on-demand. The one or more databases can each comprise a structured (e.g., indexed) collection of data and can be managed by any suitable database management systems configured to define, create, query, organize, update, and manage database(s). Exemplary database management systems can include MySQL (Structured Query Language) Database, PostgreSQL Database, Microsoft SQL Server Database, Oracle Database, SAP (Systems, Applications, & Products) Database, IBM DB2 Database, and/or NoSQL Database.

Meanwhile, communication between videoconference server 101, transcription server 102, participant devices 103, 104, and/or the one or more databases can be implemented using any suitable manner of wired and/or wireless communication. Accordingly, system 100 can comprise any software and/or hardware components configured to implement the wired and/or wireless communication. Further, the wired and/or wireless communication can be implemented using any one or any combination of wired and/or wireless communication network topologies (e.g., ring, line, tree, bus, mesh, star, daisy chain, hybrid, etc.) and/or protocols (e.g., personal area network (PAN) protocol(s), local area network (LAN) protocol(s), wide area network (WAN) protocol(s), cellular network protocol(s), powerline network protocol(s), etc.). Exemplary PAN protocol(s) can comprise Bluetooth, Zigbee, Wireless Universal Serial Bus (USB), Z-Wave, etc.; exemplary LAN and/or WAN protocol(s) can comprise Institute of Electrical and Electronics Engineers (IEEE) 802.3 (also known as Ethernet), IEEE 802.11 (also known as WiFi), etc.; and exemplary wireless cellular network protocol(s) can comprise Global System for Mobile Communications (GSM), General Packet Radio Service (GPRS), Code Division Multiple Access (CDMA), Evolution-Data Optimized (EV-DO), Enhanced Data Rates for GSM Evolution (EDGE), Universal Mobile Telecommunications System (UMTS), Digital Enhanced Cordless Telecommunications (DECT), Digital Advanced Mobile Phone System (AMPS) (IS-136/Time Division Multiple Access (TDMA)), Integrated Digital Enhanced Network (iDEN), Evolved High-Speed Packet Access (HSPA+), Long-Term Evolution (LTE), WiMAX, etc. The specific communication software and/or hardware implemented can depend on the network topologies and/or protocols implemented, and vice versa. In many embodiments, exemplary communication hardware can comprise wired communication hardware including, for example, one or more data buses, such as, for example, universal serial bus(es), one or more networking cables, such as, for example, coaxial cable(s), optical fiber cable(s), and/or twisted pair cable(s), any other suitable data cable, etc. Further exemplary communication hardware can comprise wireless communication hardware including, for example, one or more radio transceivers, one or more infrared transceivers, etc. Additional exemplary communication hardware can comprise one or more networking components (e.g., modulator-demodulator components, gateway components, etc.).

FIG. 2 is a flowchart of a method 200 for transcribing and encrypting a recording or audio data according to aspects of this disclosure. The method 200 may be initiated from the commencement of use of the UC tool by a user. For example, the method 200 may be initiated by the beginning of a video call, teleconference, virtual meeting, and the like. In other embodiments, the method 200 may be initiated ad-hoc by a user, such as by the user turning on a setting within their UC tool or triggering the system to perform transcription. In other embodiments, the method 200 may be initiated on a routine schedule (e.g., every day, week, month, etc.). In some embodiments, the method 200 may be performed locally on a user device. For example, the user device may be the device associated with the captured audio data.

The method 200 may begin at block 201, where the system may record or capture audio data. The system may record the audio data every k seconds and/or based on detected silence in the audio. In one embodiment, the method 200 may start by recording the audio either in random intervals with range 1 to k seconds, or of fixed duration, such as k seconds. K may be a parameter specifying a number of seconds from 0 to 60 which may be specified by an end user (e.g., in the user profile database) or by predefined criteria. For example, the predefined criteria may specify to record the audio every 2 seconds. The number of seconds defining k may be based on the amount of resources a device operating the method 200 may have. For example, for devices with more capacity, k may be larger and conversely, for devices with less capacity, k may be smaller.

In one embodiment, the system can use a silence detection mechanism to sample only the parts of the audio that contain sound. Silence detection mechanisms can isolate meaningful utterances (e.g., words) in the form of audio segments to reduce the analysis-input data size. When using silence detection, the system may capture at least the start of a word and, based on the configurable parameter k, one or more parts of the word. Those samples can be sufficient for a language model to detect and complete the word.

The audio data may originate from meetings, conferences, video/audio recordings, and/or other event in the UC system. The event may include a virtual meeting, video call, phone call, teleconference, video conference, webinar, or other virtual event.

At block 203, the system may analyze the waveform of the audio recording by selecting at least the starting and/or the ending phonemes of each word in the recording. The system may process the captured audio data to identify distinct audio segments based on pauses and word boundaries in the audio data.

At block 205, the system may employ automatic speech recognition (ASR) models for phonemic transcription by analyzing, with the models, each audio segment to identify and extract the phonemes. The number of extracted phonemes may be based on predefined criteria (e.g., a number k). Phoneme extraction may be performed by complex models. These complex models may use natural language processing (NLP) and/or ASR techniques, such as phonemic transcription systems (e.g., Wav2Vec2) that are geared towards processing audio data and can extract phoneme-level information from audio files. In one example, the system may use the "Whisper" model or similar speech-to-text model for phonemic transcription. The phonemic transcription mechanism with the relevant model may be fed with the inputs from block 201.

In some embodiments, the system can target less phonemes for the detection of a word if the context is sufficient. For example, if the system has detected "Summer is a great season to visit the Greek Islands," the system may need less phonemes for detection for subsequent data. For example, the system may only need "be----- of the beau------ ------- --- wa-we-----" from "because of the beautiful beaches and warm weather" when following the previous phrase about summer as the system has sufficient context to guess the following words.

At block 207, the system can employ a simple language model to complete the missing words. The language model can reconstruct complete words and sentences from the partial phoneme data. For example, the system may pass the result from block 203 or block 205 to a predictive language model to get the final output for the transcription. The system can use the language model to determine a sequence of letters based on the phonemes and any corresponding letters. Then, the system can compile the sequence of letters into words to generate the transcription of the audio data. In some embodiments, the system can generate the transcription of the audio data by compiling the last k words, where k is a number of words based on predefined criteria.

The language model may be a simple language model, such as Generative Pre-trained Transformer (GPT)-2 or other large language model (LLM)-based GPTs, as the model is only used for word completion and not for more complex tasks like analyzing the audio data. The language model can predict what the words are going to be from the phonemes. The system can use a predictive language model to reconstruct complete words and/or sentences from the partial phoneme data. In one embodiment, the language model may be operating locally on the device.

Optionally, at decision block 209, the system may determine whether there is a sensitive phoneme in the data. If yes, the system can encrypt the phoneme at block 211. If no, the method 200 ends at block 213. To determine the sensitive data, the system may analyze the compiled sequence of letters to identify words that contain sensitive information based on predefined criteria. If there is sensitive information, the system can encrypt the phonemes associated with words that contain sensitive information.

With this approach, the system described herein can reduce the CPU footprint for the translation/transcription process because the language models used in the present system are composed of a simpler architecture compared to traditional translation/transcription models, as the present language models may handle only text. Consequently, these models may use less CPU and memory. On the contrary, the traditional translation/transcription models have a more complex architecture because they need to handle both audio and text. More specifically, especially for audio signal analysis, traditional models need more layers and thus, the complexity increases.

In one embodiment, the system may utilize a hybrid solution with cloud transcription. In this case, the system may obtain a partial transcription result from the cloud and utilize locally the language model (e.g., GPT-2), in the same way, to complete the words. In this way, the translation/transcription cloud cost is reduced significantly and the local footprint remains low due to the simplicity of the language model.

In one embodiment, the system may selectively encrypt phonemes that indicate sensitive information. The system may examine if the phoneme belongs in a private word/token, based on the context of the previous words. If this is true, instead of autocompleting the missing part of the word, the system can encrypt the phoneme. Using this approach, the system can reduce the CPU cycles used for encryption as the system may encrypt only the sensitive-related content. In one example, the sensitive phoneme comparison could be anything that matches to a certain dictionary, such as a dictionary specifying words indicating a sensitive nature. The system may perform this check completely on the user device and thus the predicted result is not revealed in other services.

FIG. 3 is a flowchart depicting a method 300 for encrypting audio in selective transcription sequences according to aspects of this disclosure. The method 300 may be initiated from the commencement of use of the UC tool by a user. For example, the method 300 may be initiated by the beginning of a video call, teleconference, virtual meeting, and the like. In other embodiments, the method 300 may be initiated ad-hoc by a user, such as by the user turning on a setting within their UC tool or triggering the system to perform transcription. In other embodiments, the method 300 may be initiated on a routine schedule (e.g., every day, week, month, etc.). In some embodiments, the method 300 may be performed locally on a user device. For example, the user device may be the device associated with the captured audio data.

The method 300 may begin at block 301, where the system may capture audio input. For example, the system may record the audio input from a speaker using a microphone or other recording device. The audio input may also originate from the UC system, such as from a virtual meeting or other event occurring in the UC system.

At block 303, the system may segment or split the audio input into manageable parts (e.g., phonemes) based on the number of words and pauses or silence. To segment or split the audio input, the system can process the captured audio to identify distinct segments based on pauses and word boundaries. This allows for manageable audio clips corresponding to individual words or phrases. In some embodiments, the system can create a spectrogram of the audio data to further analyze the audio data.

At block 305, the system may apply phoneme segmentation. The system can analyze each audio segment to identify and extract phonemes. The system can transform the audio data into a phonetic representation suitable for further analysis. To achieve accurate phoneme recognition, the system may utilize advanced algorithms, such as Wav2Vec.

At block 307, the system can predict at least n phonemes or letters from each word. N may be a parameter specifying a predefined number of phonemes to predict from each word. For example, the user may specify n as part of their user profile (e.g., stored in the user profile database). Following segmentation, the system may conduct phoneme extraction to identify the fundamental sound units within each word. Rather than transcribing all the letters, the system can focus on predicting only n phonemes/letters from each word, resulting in a sequence of predicted letters interspersed with placeholders for unrecognized or sensitive phonemes. The system can utilize a model to convert the identified phonemes into corresponding letters, predicting at least a certain number of phonemes for each word. This helps in establishing a more accurate representation of the spoken content. The model may be a phonemic transcription model, which can convert audio data into speech units.

At block 309, the system can predict the letter sequence from the phonemes with a language model. The system can input the sequence from block 307, for example formatted as predicted letter, star, star, predicted letter, star, (e.g., "h**1*" for "hello"), into the language model, which can predict the rest of the letters. The stars may correspond to the number of phonemes and/or syllables skipped by the proposed system and method. The system can employ the language model to determine the most likely sequence of letters that correspond to the phonemes extracted in block 305. This prediction can enhance the accuracy of text representation by incorporating linguistic context. Additionally, when handling multiple words in this format, the language model can provide even greater accuracy. In certain cases, the system may not need to process the audio with the steps 303-307 described above, as the language model can already predict the upcoming words, especially in cases of articles, prepositions, and so on.

At block 311, to provide context for the transcribed data, the system may stack the last k words, forming a coherent representation of the recent dialogue. The system can organize the output by compiling the last k predicted words into a cohesive format. This step helps in contextualizing the information, providing a clearer understanding of the recent dialogue. Optionally, the previous steps may increase the number k to stack more words if the provided context is not enough to accurately form a coherent representation of the recent dialogue.

Optionally, at block 313, the system can assess the sensitivity level of these stacked words to identify any potentially confidential information. The system can evaluate the stacked words to identify any words that may contain sensitive information based on predefined criteria. Although phonemes alone cannot effectively indicate sensitive context, the language model can enable the system to identify which words may be sensitive. Instead of encrypting complete words, the system may encrypt only the letters associated with the sensitive phonemes, optimizing the encryption process and conserving resources. This method effectively addresses the dual challenges of security and efficiency in audio transcription, facilitating the secure processing of sensitive spoken information and provides that any confidential or critical content is recognized for further action.

In summary, by structuring the audio data into smaller segments, the system can reduce resource consumption in transcription by predicting only n letters from each word. This is because only a subset of phonemes of each word is transcribed, and the rest may be predicted from the language model (LM). Furthermore, if the system identifies a sensitive word, the system can enhance security by encrypting only the letters corresponding to sensitive phonemes, thereby streamlining the encryption process.

Optionally, at block 315, the system may determine if any sensitive words and/or sentences were identified. If there are no sensitive words and/or sentences, the method 300 proceeds to block 319 and ends. If there are sensitive words and/or sentences, the method 300 proceeds to block 317.

Optionally, at block 317, the system can encrypt only the sensitive phonemes. The system can encrypt only the phonemes identified as sensitive to protect confidential information while allowing non-sensitive data to remain accessible. This targeted approach can enhance data security without compromising the overall integrity of the audio transcription.

At block, 319, the method 300 ends.

FIG. 4 illustrates a block diagram of a system 400 that can be employed for transcribing audio data for a UC system, as described in greater detail below. System 400 is merely exemplary and embodiments of the system are not limited to the embodiments presented herein. System 400 can be employed in many different embodiments or examples not specifically depicted or described herein. In some embodiments, certain elements or modules of system 400 can perform various procedures, processes, and/or activities. In these or other embodiments, the procedures, processes, and/or activities can be performed by other suitable elements or modules of system 400.

Generally speaking, system 400 can be implemented with hardware and/or software. Part or all of the hardware and/or software implemented in system 400 can be conventional or part or all of the hardware and/or software can be customized (e.g., optimized) for implementing part or all of the functionality of system 400 described herein. When implemented as software, one or more elements of system 400 can be emulated (e.g., reproduced functionally and/or by action via software). For example, a virtual machine having one or more elements described below can be instantiated on one or more elements of system 100 (FIG. 1).

When implemented as hardware, one or more of the elements of system 400 can be coupled together using one or more chassis configured to hold one or more circuit boards and/or serial bus(es). These boards and buses allow the various elements of system 400 to communicate amongst each other to accomplish their intended purposes. While elements of system 400 are described below individually, each can also be integrated into one or more chassis, circuit boards, and/or buses of system 400. On the other hand, one or more elements of system 400 can also be removable (e.g., via a%Peripheral Component Interconnect (PCI) slot on a motherboard and/or a USB port). One or more elements of system 400 may also be integrated and/or embedded in a different machine or manufacture. Although specific constructions of boards and buses within system 400 are not shown, it should be understood that their construction can be tied to a form factor selected for system 400.

System 400 can take a number of different form factors based on its implementation. For example, system 400 can be implemented as a desktop computer, a laptop computer, a mobile device, and/or a wearable device as described herein. Further, system 400 can comprise a single computer, a single server, a cluster or collection of computers or servers, or a cloud of computers or servers. Typically, a cluster or collection of servers can be used when the demand on 400 exceeds the reasonable capability of a single server or computer, when a distributed structure for system 400 is desired, and/or when parallel computing is desired.

In many embodiments, system 400 can comprise a processor 401, a memory storage 402, an input device 403, a graphics adapter 404, a display device 405, a graphical user interface (GUI) 406, and/or a network adapter 407.

Generally speaking, processor 401 can comprise any type of computational circuit. For example, processor 401 can comprise a microprocessor, a microcontroller, a controller, a complex instruction set computing (CISC) microprocessor, a reduced instruction set computing (RISC) microprocessor, a very long instruction word (VLIW) microprocessor, a graphics processor, a digital signal processor, application specific integrated circuits (ASICs), etc. Processor 401 can be configured to implement (e.g., run) computer instructions (e.g., program instructions) stored on memory devices in system 400. At least a portion of the program instructions, stored on these devices, can be suitable for carrying out at least part of the techniques and methods described herein. Architecture and/or design of processor 401 can be compliant with any of a variety of commercially distributed architecture families. For example, a processor can have a 32-bit (x86) architecture and/or a 64-bit (x86-64, IA64, and AMD64) architecture. Processor 401 can be configured to perform parallel computing in combination with other elements of system 400 and/or additional processors. Generally speaking, parallel computing can be seen as a technique where multiple elements of system 400 are used to perform calculations simultaneously. In this way, complex and repetitive tasks (e.g., training a predictive software application) can be performed faster and with less processing power than without parallel computing.

Generally speaking, memory storage 402 can comprise non-volatile memory (e.g., read only memory (ROM)) and/or volatile memory (e.g., random access memory (RAM)). The non-volatile memory can be removable and/or non-removable non-volatile memory. Meanwhile, RAM can comprise dynamic RAM (DRAM), static RAM (SRAM), or some other type of RAM. Further, ROM can include mask-programmed ROM, programmable ROM (PROM), one-time programmable ROM (OTP), erasable programmable read-only memory (EPROM), electrically erasable programmable ROM (EEPROM) (e.g., electrically alterable ROM (EAROM) and/or flash memory), or some other type of ROM. Memory storage 402 can comprise non-transitory memory and/or transitory memory. All or a portion of memory storage 402 can be referred to as memory storage module(s) and/or memory storage device(s). Memory storage 402 can have a number of form factors when used in system 400. For example, memory storage 402 can comprise a magnetic disk hard drive, a solid state hard drive, a removable USB storage drive, a RAM chip, etc.

Memory storage 402 can be encoded with a wide variety of computer code configured to operate system 400. For example, portions of memory storage 402 can be encoded with a boot code sequence suitable for restoring system 400 to a functional state after a system reset. As another example, portions of memory storage 402 can comprise microcode such as a Basic Input-Output System (BIOS) operable with elements of system 400. Further, portions of the memory storage 402 can comprise an operating system (e.g., a software program that manages the hardware and software resources of a computer and/or a computer network). The BIOS can be configured to initialize and test components of system 400 and load the operating system. Meanwhile, the operating system can perform basic tasks such as, for example, controlling and allocating memory, prioritizing the processing of instructions, controlling input and output devices, facilitating networking, and/or managing files. Exemplary operating systems can comprise software within the Microsoft^{®} Windows^{®}, Mac OS^{®}, Apple^{®} iOS^{®}, Google^{®} Android^{®}, UNIX^{®}, and/or Linux^{®} series of operating systems.

Input device 403 can be configured to allow a user to interact and/or control elements of system 400. A number of devices and be used as input device 403 alone or in combination. For example, input device 403 can comprise a keyboard, a mouse, a touch screen, a microphone, a camera, etc. Input device 403 can be coupled to other elements of system 400 in a number of ways. For example, input device 403 can be coupled via a Universal Serial Bus (USB) port in a wired and/or wireless manner or via a specialized port (e.g., a PS/2 port) depending on the specific device. User inputs through input device 403 can come in a number of forms. For example, when input device 403 comprises a microphone, user input can be received via voice commands and/or a speech to text software application. As another example, when input device 403 comprises a camera, user input can be received via bodily movements that are captured and interpreted by system 400.

Generally speaking, graphics adapter 404 can be configured to receive and/or generate one or more elements for display on display device 405. Exemplary embodiments of graphics adapter 404 can comprise devices within the NVIDIA^{®} GeForce^{®} and/or the AMD^{®} RX^{®} series of video cards. In many embodiments, a chipset present on graphics adapter 404 can be configured to perform similar, simultaneous computations in a manner more efficient than other chipsets. For example, rendering a 3D scene on graphics adapter 404 can involve repeated geometric calculations performed in parallel to generate the 3D scene. As another example, repeated mathematical calculations involved in training a predictive software application can be performed in parallel on graphics adapter 404 more efficiently than on processor 401. Display device 405 can receive and display signals from graphics adapter 404. A number of devices can be used as display device 405. For example, display device 405 can comprise a computer monitor, a television, a touch screen display, a heads up display (HUD) medium, etc.

In some embodiments, display device 405 can optionally display graphical user interface (GUI) 406. GUI 406 can be a part of and/or displayed by participant devices 103, 104. With regards to form, GUI 406 can comprise text and/or graphics (image) based user interfaces. For example, GUI 406 can comprise a heads up display (HUD). When GUI 406 comprises a HUD, GUI 406 can be projected onto a medium (e.g., glass, plastic, metal, etc.), displayed in midair as a hologram, and/or displayed on display device 405. GUI 406 can be color, black and white, and/or greyscale. GUI 406 can be implemented as an application running on a computer system, such as computer system 400, videoconference server 101 (FIG. 1), transcription server 102 (FIG. 1), and/or participant devices 103, 104 (FIG. 1). GUI 406 can also comprise a website accessed through a network (e.g., network 120 (FIG. 1)). For example, GUI 406 can comprise a cloud storage website. When GUI 406 allows for modification and/or changes to one or more settings in system 400, it can be referred to as an administrative (e.g., back end) GUI. GUI 406 can also be displayed as or on a virtual reality (VR) and/or augmented reality (AR) system or display. GUI 406 can receive a number of interactions from a user via input device 403. For example, an interaction with a GUI can comprise a click, a look, a selection, a grab, a view, a purchase, a bid, a swipe, a pinch, a reverse pinch, etc.

Network adapter 407 can be configured to connect system 400 to a computer network by wired communication (e.g., a wired network adapter) and/or wireless communication (e.g., a wireless network adapter). Network adapter 407 can be integrated into one or more chassis, circuit boards, and/or buses or be removable (e.g., via a PCI slot on a motherboard). For example, network adapter 407 can be implemented via one or more dedicated communication chips configured to receive various protocols of wired and/or wireless communications.

For simplicity and clarity of illustration, the drawing figures illustrate the general manner of construction, and descriptions and details of some features and techniques may be omitted to avoid unnecessarily obscuring the present disclosure. Additionally, elements in the drawing figures are not necessarily drawn to scale. For example, the dimensions of some of the elements in the figures may be exaggerated relative to other elements to help improve understanding of embodiments of the present disclosure. The same reference numerals in different figures denote the same elements.

The terms "first," "second," "third," "fourth," and the like in the description and in the claims, if any, are used for distinguishing between similar elements and not necessarily for describing a particular sequential or chronological order. It is to be understood that the terms so used are interchangeable under appropriate circumstances such that the embodiments described herein are, for example, capable of operation in sequences other than those illustrated or otherwise described herein. Furthermore, the terms "include," and "have," and any variations thereof, are intended to cover a non-exclusive inclusion, such that a process, method, system, article, device, or apparatus that comprises a list of elements is not necessarily limited to those elements but may include other elements not expressly listed or inherent to such process, method, system, article, device, or apparatus.

The terms "left," "right," "front," "back," "top," "bottom," "over," "under," and the like in the description and in the claims, if any, are used for descriptive purposes and not necessarily for describing permanent relative positions. It is to be understood that the terms so used are interchangeable under appropriate circumstances such that the embodiments of the apparatus, methods, and/or articles of manufacture described herein are, for example, capable of operation in other orientations than those illustrated or otherwise described herein.

The terms "couple," "coupled," "couples," "coupling," and the like should be broadly understood and refer to connecting two or more elements mechanically and/or otherwise. Two or more electrical elements may be electrically coupled together, but not be mechanically or otherwise coupled together. Coupling may be for any length of time, e.g., permanent or semi-permanent or only for an instant. "Electrical coupling" and the like should be broadly understood and include electrical coupling of all types. The absence of the word "removably," "removable," and the like near the word "coupled," and the like does not mean that the coupling, etc. in question is or is not removable.

As defined herein, "real-time" can, in some embodiments, be defined with respect to operations carried out as soon as practically possible upon occurrence of a triggering event. A triggering event can include receipt of data necessary to execute a task or to otherwise process information. Because of delays inherent in transmission and/or in computing speeds, the term "real time" encompasses operations that occur in "near" real time or somewhat delayed from a triggering event. In a number of embodiments, "real time" can mean real time less a time delay for processing (e.g., determining) and/or transmitting data. The particular time delay can vary depending on the type and/or amount of the data, the processing speeds of the hardware, the transmission capability of the communication hardware, the transmission distance, etc. However, in many embodiments, the time delay can be less than approximately one second, two seconds, five seconds, or ten seconds.

As defined herein, "approximately" can, in some embodiments, mean within plus or minus ten percent of the stated value. In other embodiments, "approximately" can mean within plus or minus five percent of the stated value. In further embodiments, "approximately" can mean within plus or minus three percent of the stated value. In yet other embodiments, "approximately" can mean within plus or minus one percent of the stated value.

Although systems and methods for context dependent invocation of predictive software application and data storage have been described with reference to specific embodiments, it will be understood by those skilled in the art that various changes may be made without departing from the scope of the disclosure. Accordingly, the disclosure of embodiments is intended to be illustrative of the scope of the disclosure and is not intended to be limiting. It is intended that the scope of the disclosure shall be limited only to the extent required by the appended claims. For example, to one of ordinary skill in the art, it will be readily apparent that any element of FIGs. 1-4 may be modified, and that the foregoing discussion of certain of these embodiments does not necessarily represent a complete description of all possible embodiments. For example, one or more of the procedures, processes, or activities of FIG. 1 may include different procedures, processes, and/or activities and be performed by many different modules, in many different orders.

All elements claimed in any particular claim are essential to the embodiment claimed in that particular claim. Consequently, replacement of one or more claimed elements constitutes reconstruction and not repair. Additionally, benefits, other advantages, and solutions to problems have been described with regard to specific embodiments. The benefits, advantages, solutions to problems, and any element or elements that may cause any benefit, advantage, or solution to occur or become more pronounced, however, are not to be construed as critical, required, or essential features or elements of any or all of the claims, unless such benefits, advantages, solutions, or elements are stated in such claim.

Moreover, embodiments and limitations disclosed herein are not dedicated to the public under the doctrine of dedication if the embodiments and/or limitations: (1) are not expressly claimed in the claims; and (2) are or are potentially equivalents of express elements and/or limitations in the claims under the doctrine of equivalents.

## Claims

1. A computerized method for transcribing audio data for a unified communication, UC, system, the method comprising:
capturing audio data from the UC system;
processing the captured audio data to identify and extract a plurality of phonemes using phonetic sampling;
converting, using a computerized model, the plurality of phonemes into a plurality of corresponding letters;
determining, using a language model, a sequence of letters based on the plurality of phonemes and the plurality of corresponding letters; and
compiling the sequence of letters into words to generate a transcription of the audio data.

2. The computerized method of claim 1, further comprising:
analyzing the compiled sequence of letters to identify words that contain sensitive information based on predefined criteria; and
encrypting one or more phonemes of the plurality of phonemes associated with identified words that contain sensitive information.

3. The computerized method of claim 1 or claim 2, wherein the audio data originates from an event in the UC system comprising a virtual meeting, video call, phone call, teleconference, video conference, webinar, or other virtual event.

4. The computerized method of any preceding claim, wherein the number of extracted phonemes for each word is based on predefined criteria.

5. The computerized method of any preceding claim, wherein to generate the transcription of the audio data comprises compiling the last k words, and wherein k is a number of words based on predefined criteria.

6. The computerized method of any preceding claim, wherein the computerized model comprises a phonemic transcription model, wherein the phonemic transcription model converts audio data to speech units.

7. The computerized method of any preceding claim, wherein the language model comprises a predictive model, wherein the predictive model reconstructs complete words and sentences from partial phoneme data.

8. The computerized method of any preceding claim, wherein the method is performed locally on a user device associated with the audio data.

9. The computerized method of any preceding claim, wherein capturing audio data comprises:
recording the audio data either (i) in random intervals with range of 1 to k seconds or (ii) of fixed duration of k seconds, wherein k is a number of seconds based on predefined criteria.

10. The computerized method of any preceding claim, wherein capturing audio data comprises:
capturing the audio data using a silence detection mechanism to sample the parts of the audio data that contain sound.

11. A system for transcribing audio data comprising:
an electronic device comprising:
a meeting application configured to facilitate virtual communication between two or more people; and
a processor configured to:
capture audio data from the meeting application;
process the captured audio data to identify and extract a plurality of phonemes using phonetic sampling;
convert, using a computerized model, the plurality of phonemes into a plurality of corresponding letters;
determine, using a language model, a sequence of letters based on the plurality of phonemes and the plurality of corresponding letters; and
compile the sequence of letters into a plurality of words to generate a transcription of the audio data.

12. The system of claim 11, wherein the processor is further configured to:
analyze the compiled sequence of letters to identify words that contain sensitive information based on predefined criteria; and
encrypt one or more phonemes of the plurality of phonemes associated with identified words that contain sensitive information and/or
wherein the audio data may originate from an event in the meeting application comprising a virtual meeting, video call, phone call, teleconference, video conference, webinar, or other virtual event and/or
wherein the number of extracted phonemes for each word is based on predefined criteria and/or wherein to generate the transcription of the audio data the last k words are compiled, and wherein k is a number of words based on predefined criteria and/or
wherein the computerized model comprises a phonemic transcription model, wherein the phonemic transcription model converts audio data to speech units.

13. The system of claim 11 or claim 12, wherein to capture audio data, the processor is further configured to:
record the audio data either (i) in random intervals with range of 1 to k seconds or (ii) of fixed duration of k seconds, wherein k is a number of seconds based on predefined criteria and/or wherein to capture audio data, the processor is further configured to:
capture the audio data using a silence detection mechanism to sample the parts of the audio data that contain sound.

14. A computer-implemented method comprising:
capturing audio data from a unified communication (UC) system;
processing the captured audio data to identify and extract a plurality of phonemes;
converting the plurality of phonemes into a plurality of corresponding letters;
determining a sequence of letters based on the plurality of phonemes and the plurality of corresponding letters; and
compiling the sequence of letters into words to generate a transcription of the audio data.

15. The method of claim 14, wherein the number of identified and extracted phonemes decreases as more context is received from the audio data.
